# EUROPEAN PATENT APPLICATION

(11) **EP 3 166 051 A1**
(43) Date of publication of application: **10.05.2017**
(21) Application number: 16000473.5
(22) Date of filing: 26.02.2016
(51) Int. Cl.: G06Q 10/00

(54) **A CONTROL SYSTEM FOR WORKING MACHINE**

(30) Priority: 06.11.2015 JP 2015218152
(71) Applicant: Kantounouki Kabushiki Kaisha, Tochigi-ken (JP)
(72) Inventor: Inaba, Shigefusa, Oyama-shi, Tochigi-ken (JP); Manaka, Takeru, Oyama-shi, Tochigi-ken (JP)
(74) Representative: Tomerius, Isabel

(57) **Abstract**

This invention relates to a system to control a working machine such as agricultural machine, etc., among consumers, the sales shops and business department of head office after selling it.

The control system for the working machine in this invention is comprising the two-dimensional code applied to the main body of the working machine, and portable terminals owned by each of the consumers, sales shops and the business department of head office, and the control support server connected through the network.

The control support server provides;
a) to the portable terminals of the consumer, etc., in accordance with an access to the two-dimensional code, means for enabling to register "a date of informing for safety"; means for enabling to register "a warranty starting date"; means for instructing "an advice for initial inspection" on the basis of "an execution date of initial inspection", etc.,
b) to portable terminal of the sales shop, means for enabling to register "the execution date of initial inspection"
c) to the portable terminal of the business department of head office, means for enabling to register "the warranty starting date", even if the register permission term of warranty is expired.

## Description

### BACKGROUND OF THE INVENTION

### 1. Field of Invention

This invention relates to a system to control a working machine such as agricultural machine, etc., unitary among consumers, the sales shops and business department of head office mainly after selling it.

### 2. Description of Related Art

In many cases, it is makes a conformation of business relations for agricultural machines among three partners, i.e. the business department of a manufacturing maker (the head office), the sales shop for selling the working machines in place of the business department of the head office and an end consumer whom purchasing the working machine.

By the way, the working machine for agricultural working such as cultivation, harvest, etc., it is reported that accidents, for example, that a user is held between rotary elements during cultivation work or entangled into a conveyor during harvest work.

It is a requisite to informing for safety to the consumer to prevent such accidents accompanied by the works.

In addition, to compliance with the warranty for a trouble, etc., of the working machine, it is necessary to the determination of a warranty starting date agree with a time in which the consumer starts to use the working machine.

Further, it is necessary to an advice for executing the initial inspection to the consumer, to prompt a normal operation and an efficient work after the usage of the working machine, and to extend a usage life of the working machine as possible.

Then, in order to compliance with those measures such as described above, it is necessary to make a close cooperate mutually among the consumer, the sales shop which has many chances to direct contacts with the consumer and the business department of head office of the manufacturing maker.

In this system, the business department of head office waits for getting a report after the sales shop was executed those measures.

However, it is quite hard to check whether those measures have been executed properly up to what level.

In addition, the sales shop is lacking in a fast and positive report to the business department of head office, because an appropriate and detailed accommodate to the consumer about a safe operation, etc., of the working machine.

Further, informing for safety and the determination of the warranty starting date are important items to the consumer, these items have influence on the consumer's physical and the burden of the cost of the consumer, so the to promotion the executed of these items is attained to a self-profit of the consumer.

Additionally, to execute a maintenance and repairing work is important, for the working machine use in safety and long period as possible.

The maintenance and repairing work may bring a troublesome situation, it may not be expect the consumer to do the maintenance and repairing work voluntarily, and so a maker side issues the advice for the maintenance and repairing work. However, the advice for the maintenance and repairing work that is issued each given period under gathering all working machine, this advice does not provide any influence against consumers with different periods and different frequency of usage of the working machine. So, to take a more effective measure, it is desired to attain means for respective accommodate corresponding to individual states of working machine.

A method for resolving such a problem as described above has not yet been present in the prior art.

As a reference only, the applicant cites a vehicular information described in the patent document 1. This reference system provides a proposal that a control seal is adhered to the vehicle and the vehicle information is controlled through a network system. However, this proposal corresponds to a regular inspection such as a vehicle inspection, etc., defined in Road Transport Vehicle Act and do not resolve the aforesaid problems.

### PRIOR ART DOCUMENT

### Patent Documents

Cited reference 1: Japanese Publication gazette No. 2003-72526.

### SUMMARY OF THE INVENTION

### Problem to be Solved by the Invention

In view of the above, this invention aim at developing a system in which making a close cooperation among the consumer, the sales shop and the business department of head office under a utilization of a two-dimensional code applied to a working machine, a portable terminal capable of reading the two-dimensional code and a control support server, etc., on the network through Inter-net, and it operates with a quite simple and useful effect.

A control system for working machine comprising;
a two-dimensional code including an individual identification number and a connecting-URL, is applied to the main body of the working machine;
portable terminals owned by each of the consumers for purchasing the working machine, sales shops for selling the working device to the consumers, and the business department of head office for selling the working machine to the sales shop; and
a control support server connected through the network; the portable terminals have;
a function for reading the two-dimensional code, a wireless connecting function to the network and an operation screen; the control support server provides;
a) to the portable terminals of the consumers, the sales shops or the business department of head office, in accordance with an access to the connecting-URL that is included in the two-dimensional code,
   means for enabling to register "a date of informing for safety" on the basis of a confirmation of informing for safety and to reject a transition to a next stage when the date is not registered;
   means for enabling to register "a warranty starting date" on the basis of a start of warranty and to reject a transition to a next stage when the date is not registered;
   means for instructing "an advice for initial inspection" when "the execution date of initial inspection" is not registered yet even after "the initial inspection planned date" calculated on the basis of "the warranty starting date",
   means for transiting on a page of "Information on machine" including an operation manual after the registered "the date of informing for safety" and "the warranty starting date" and "the advice for initial inspection" is instructed,
b) to portable terminal of the sales shop, means for enabling to register "the execution date of initial inspection"
c) to the portable terminal of the sales shop, means for enabling to register "the warranty starting date" even if the register permission term of warranty is expired under an access to an exclusive URL.

The control system for working machine according to Claim 2, wherein means for providing an caution for an execution of maintenance and repairing work when an accumulated working time of the working machine exceeds a specified time is provided on the page of "Information on machine".

The control system for working machine according to Claim 3, wherein means for inputting a cultivation diary is provided on the page of "Information on machine".

The control system for working machine according to Claim 4, wherein means for enabling to cancel the registration of "The date of informing for safety" and "The warranty starting date" is provided to the business department of head office.

### DISCLOSURE OF THE INVENTION

The control system for the working machine in this invention operates under a utilization of the two-dimensional code applied to the main body of the working machine, portable terminals owned by each of the consumers, sales shops and the business department of head office and the control support server connected through the network, in such a way that to require the registration of "the date of informing for safety" and "the warranty starting date", and the operation can not transited to a next stage under no-registration of those, accordingly, "informing for safety" and "the start of warranty" are executed without failure.

At first, "informing for safety" has an effect that it is possible to avoid physical bad influence to the consumer under an operation of the working machine as possible, since to notify the consumer beforehand about a dangerous situation foreseen on the basis of a content of work, a characteristic of the machine and an erroneous operation of the working machine. It becomes possible to attain a physical safety for the consumer and enables the business department of head office to confirm it.

Second, "the start of warranty" has an effect that a warranty applied for the working machine certainly, under corroboration of a starting warranty including an insurance service for generating damage or breakage under shipment and usage of the working machine.

In addition, "the advice for the initial inspection" is executed in the cases if "the executed date of initial inspection" is not registered from the sales shop when a date is exceed the initial inspection planned date that is calculated by the computer program of the control support server. It has an effect that it is promote a longer period usage and a safe operation of the sold working machine under it driving or operation no trouble or no failure state.

In addition, the sales shop is provided with means for enabling to register "the executed date of initial inspection", and "the initial inspection" to be executed certainly between the consumer and the sales shop.

In addition, on the page of "Information on machine" including "Operation manual", the consumer can peruse the name of parts, a driving and operating method of the purchased working machine, etc., and its operation to be made certainly.

Further, the business department of head office is provided with means for enabling to connect from "the exclusive URL for the business department of head office" while not depending on the two-dimensional code to the stage of "Warranty registration after expiring the register permission term" and enabling to register the warranty starting date at the stage of "Warranty registration after expiring the register permission term". As a result, it may provide an effect that it is possible to flexibly accommodate in the case of a sells time of the working machine from the sales shop exceeds the specified period after the working machine is shipped from the head office to the sales shop.

All these effects are attained mainly around the working machine and it may be possible to attain a new effect that the working machine is applied as one unit, and a confirmation of informing for safety, a confirmation of the warranty starting date, an advice for initial inspection, etc., for every working machine can be unitary controlled.

The control system of the working machine according to Claim 2, to provide the caution for the execution of maintenance and repairing work when an accumulated working time of the working machine exceeds a specified time and there is provides an effective mean corresponding to a respective situation of the working machine.

The control system of the working machine according to Claim 3, it is possible to input a cultivation diary and to left a record concerning cultivation.

The control system for working machine according to Claim 4, the business department of head office enables to cancel the registration of "the date of informing for safety" and "the warranty starting date" and enables to be accommodated for its reselling. I

### BRIEF DESCRIPTION OF THE DRAWINGS

FIG. 1 is a pattern diagram showing the organization of the entirety system.
FIG. 2 is a flow chart showing the entirety system.
FIG. 3 is a transition view of a part (A-1) in FIG. 2.
FIG. 4 is a transition view of a part (A-2) in FIG. 2.
FIG. 5 is a transition view of a part (C) in FIG. 2.
FIG. 6 is a transition view of a part (D) in FIG. 2.
FIG. 7 is a front view of the example for screen of the portable terminal.
FIG. 8 is a side view for a two-dimensional code label protection cover.

### BEST MODE FOR CARRYING OUT INVENTION

### <the entirety system>

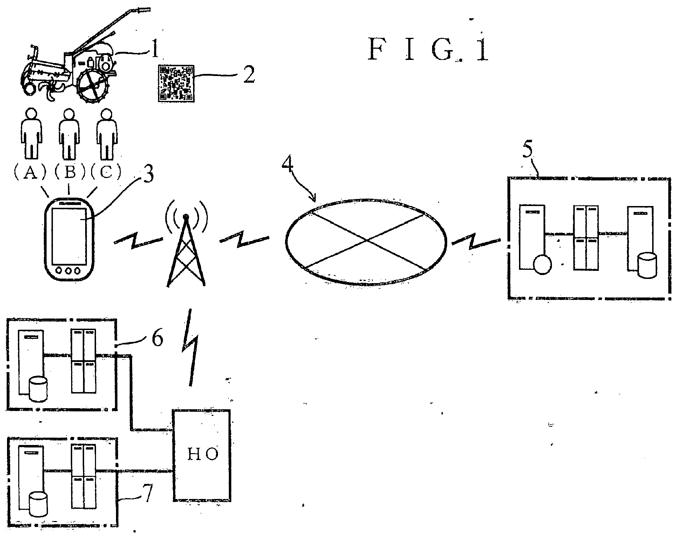

A substantial content of the entirety system to the agricultural working machine such as a cultivating machine, an inter-ridge working machine, etc., will be described as follows:
As shown in FIG. 1, it is constituted by the two-dimensional code 2 including an individual identification number and a connecting-URL, is applied on the main body of the working machine 1, each portable terminal 3 among the consumer (A), the sales shop (B) and the business department of head office (C) capable of reading the two-dimensional code 2, and the control support server 5 connecting through the network 4 including the Inter-net.
A head office production control server 6 and a head office sales control server 7 are added to the control support server 5, as required, and the accumulated data in each of servers is transmitted regularly and is registered on the data-base of the control support server 5.

The head office (HO) is meant by a presence mainly acting as a center of the main control work by the maker manufacturing the working machine, and the business department of head office (C) is defined as a person bearing the sales activity of the working machine at the head office. The sales shop (B) is defined as a person including the agent, for selling the working machine to a consumer, and the consumer (A) is defined as a person for purchasing the working machine from the sales shop and to be carried out the operation.

A communication protocol of the network is HTTP and a description language is HTML.

### <the two-dimensional code>

It is possible for the two-dimensional code 2 to include an individual identification number of the working machine and the connecting-URL, and use QR-code (a registered trademark), etc. This individual identification number includes a product number, a machine number and an encryption machine number. Then, the two-dimensional code 2 can be adhered to a part of the working machine 1 by a double adhesive tape, etc.

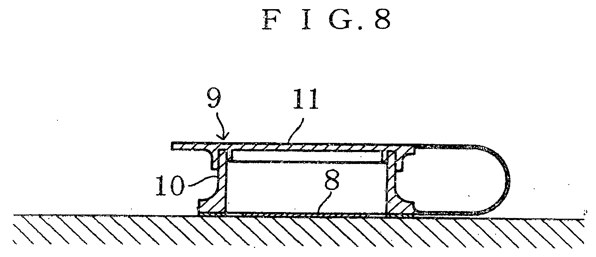

Adhesion of the two-dimensional code 2 to the working machine 1 can be carried out to explain more concretely by the following steps as shown in FIG. 8.

For example, a two-dimensional code label 8 is adhered to the working machine 1 such as a machine used for agricultural work, civil construction work, etc., and at the same time a two-dimensional code label protection cover 9 is formed to enclose the two-dimensional code label 8 adhered around it.

As the two-dimensional code label protection cover 9, it is possible to use a cylindrical-cylinder body 10 raised up from the two-dimensional code label 8 and a lid 11 that is arranged to be openable or closable at an end surface acting as an opposing side surface against the two-dimensional code label 8. With such an arrangement as above, it can be adhered under a form in which damage and stained loss of the two-dimensional code label 8 are certainly prevented by the two-dimensional code label protection cover 9.

### <portable terminal>

The portable terminal 3 has a function to read information from the two-dimensional code 2, a function connected to the control support server 5 in a wireless manner through the network including the Inter-net and an operation-screen capable of displaying Text Box, etc. For example, as this terminal, a portable telephone with a camera such as a smart-phone, multi-functional mobile phone, etc., can be used. The operation-screen is manufactured on the basis of GUI.

### <server>

As described above, as the servers used in this invention, there are provided the control support server 5, the head office production control server 6 and the head office sales control server 7.

The control support server 5 has a Web server, an application server and a data-base server and becomes a port for the network and also becomes a core in this system for processing in respect to the major items and memory in view of executing the present system for "Informing for safety", "Registration of the warranty starting date", "Advice for initial inspection", "Information on machine", etc., to be described later.

The Web server performs as its major role, a formation of the operation screen and an acceptance of information from the consumer. The application server performs as its major role, a processing of the information. The date-base server performs as its major role, a storage of data.

As the basic OS can be used Linux (a registered trademark). As the data-base can be used MySQL (a registered trademark).

The head office production control server 6 and the head office sales control server 7 are installed at the head office. The servers 6, 7 has an application server and a data-base server, and the data such as manufacturing data, sales data, stock data, etc., are stored in each server. And each of the data transmits regularly on the data-base of the control support server 5 through the network and register.

The server has a RAM for memorizing programs or data, a CPU acting as a central processing device for executing calculation, etc., on the basis of the programs, a hard-disc for memorizing the processed data, etc., a communication-interface for receiving and transmitting, etc.

### <informing for safety>

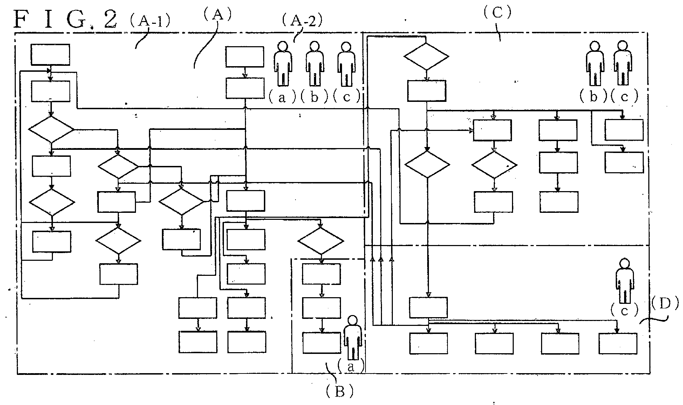

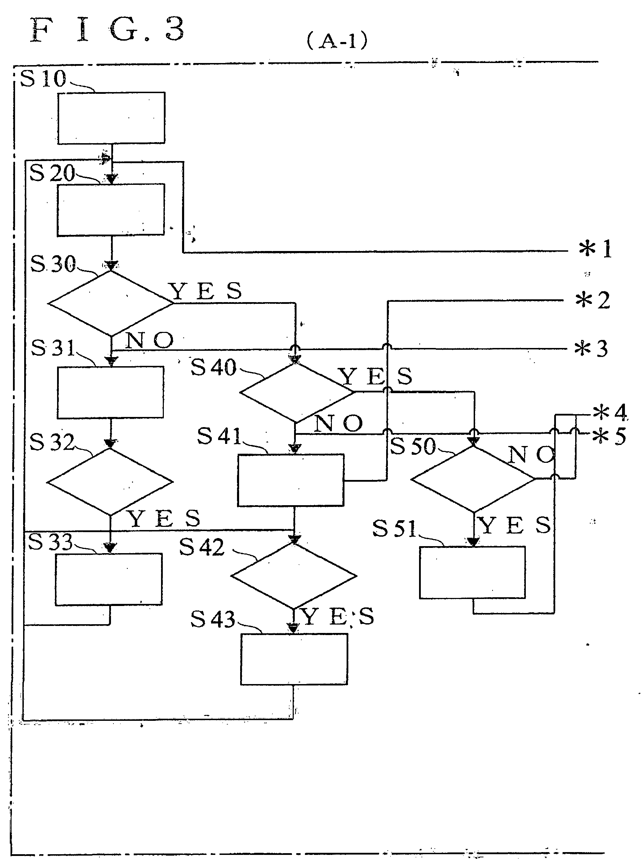

Then, referring to FIG. 2 showing a screen transition and FIG. 3 to FIG. 6, the control system is performed on the basis of aforesaid system will be described as follows.

At first, the portable terminal 3 reading the two-dimensional code 2 applied on the working machine 1 and transmitted to the Inter-net, then it automatically connected to "Web Site of the head office S10" from the connecting-URL.

Next, at the stage of "Format S20" is preparing.

At the stage of "Format S20", information of a product number and a machine number are included in the connecting-URL read from the two-dimensional code 2 and information on the data-base of the control support server 5 are collated to each other. Only when the information are agree with each other, the operation is transited to the next stage. With this arrangement, it is confirmed that the product number and the machine number of the working machine 1 are correct.

Then, the operation is transited to the stage of "Informing for safety" after information of the product number and the machine number reading from the two-dimensional code 2 and information of the memory data of control support server 5 are collated to each other.

The operation is branched at the stage of "Registered the date of informing for safety S30". When it is judged YES (registered), the operation is transmitted to the next stage. When it is judged NO (not yet register), the operation is transited to the stage of "Confirmation of informing for safety S31".

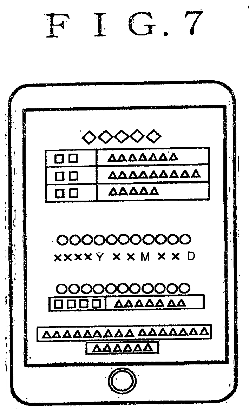

At the stage of "Confirmation of informing for safety S31", as shown in FIG. 7, after check "a model number, the product number and the machine number" display on the screen of portable terminal, it is require to input "the date of described from the sales shop" by a form of "year, month, day" through a spin button, to input "Name" through a text box (use a kana letter), and to tap a button display of "the information concerning the safety has been received from the sales shop". When the column of "Name" is not yet inputted, a massage of "Please input your name to the name column." is displayed. The inputting operation is executed by the consumers or the sales shop input on behalf of the consumer.

This system has adopted a repeat conformation that upon tapping and finished the operation at the stage of "Confirmation of informing for safety S31", the operation return to "Format S20", it is judged that the date of informing for safety has already been registered and the operation is transited to the next stage.

The operation cannot be transited to the next stage unless the registration of the date of informing for safety cannot be confirmed, and "informing for safety" is carried out certainly under this measures.

The objects of "informing for safety" are as follows.
a) Dangerous situations that are foreseen beforehand on the basis of work contents such as cultivation at a slant land, burying due to deep digging and flowing-in of water, etc.
b) Dangerous situations on the basis of exposure of the claws, a treading of rotary wheel and a characteristic of the machine caused by the protrusions of bamboo levers.
c) Dangerous situations on the basis of right and left reverse operation of a handle, a reverse operation of forwarding and stop, an erroneous operation of the work machine, etc.

### <registration of the date of starting warranty>

The operation is transited to the stage of "Registered the warranty starting date S40" after check and clears the stage of "Registered the date of informing for safety S30".

The registration of the warranty starting date is carried out for a warranty including an insurance service for generating damage or breakage under the working machine 1 for sale.

The "Registration of the warranty starting date S41" is also an important item in the present control system, and the operation cannot be transited to the next stage unless the registration cannot be confirmed.

To explain more concretely, as shown in FIG. 3, the portable terminal 3 connected to "Web Site of the head office S10" from the connecting-URL, the operation passes through "Format S20" and then branched at the stage of "Registered the warranty starting date S40". When it is judged YES(registered), the operation is transited to the next stage. When it is judged NO(not yet register), the operation is transited to the stage of "Registration of the warranty starting date S41".

At the stage of "Registration of the warranty starting date S41", after check "the model number, the product number and the machine number" display on the screen of portable terminal, it is require to input "the warranty starting date" through the spin button it form of "year, month, day", to input "Name" through the text box (use a kana letter), and to tap a button display of "the warranty is started". The inputting operation is executed by the consumers or the sales shop input on behalf of the consumer.

This system has adopted the repeat conformation that upon tapping, the operation return to "Format S20", it is judged that "Registered the warranty starting date S40" already clear and the operation is transited to the next stage.

The operation cannot be transited to the next stage unless that does not tapping, so, the warranty starting date is registered certainly.

"Registration of warranty starting date S41" is executed for the warranty including an insurance service for generating damage or breakage under shipment and usage of the working machine. The registration of the warranty starting date is an important item corroborative the start of warranty, and the warranty applied for the registered working machine certainly under the registration.

"The registration of the warranty starting date" has setting a specified period, and if the specified period is expired, the warranty starting date cannot be registered. As to "the registration of the warranty starting date" after the specified period is expired, it will be described at a page of menu for the business department of head office.

### <initial inspection>

"Initial inspection" means a first time inspection, it is requires after elapsing the specified period from the soled date of the working machine 1.

If initial inspection is not yet executed when it is required after operating "the registration of the warranty starting date", the operation is transited to the stage of "Advice for the initial inspection S51".

As a rule, the operation can transit to the stage of "Information on machine S60" after checks both registrations of "the date of informing for safety" and "the warranty starting date".

In the case that the initial inspection is not yet executed when it is required, the operation is transited to the stage of "Advice for the initial inspection S51" in order to prompt a rapid and smooth execution in view of an importance of the initial inspection.

To explain more concretely, as shown in FIG. 3, the operation passes through "Format S20" and then branched at "Non-execute when initial inspection is require S50". When it is judged YES, the operation is transited to the stage of "Advice for the initial inspection S51", when it is judged NO, the operation is transited to the next stage.

At the stage of "Advice for the initial inspection S51", after check "the model number, the product number and the machine number" display on the screen of portable terminal, and displays "Please accepts 3-month inspection at the sales shop, since 3-months have been passed from the warranty is started." on the screen of portable terminal 3 of the consumers. At the same time, it is required to tap a button saying that "The 3-month inspection has been received." or a button saying that "We will receive the inspection afterward.". When tapping the former button, display saying that "Please register the execution date of initial inspection at the sales shop where you have received inspection." on the Dialog Box. When tapping the latter button, display saying that "The inspection is important. It is necessary to stand long use for the machine." on the Dialog Box.

At the branch condition of "Non-executed when initial inspection is require S50", to explain more concretely, it is judged to presence or non-presence the registrations of "a planned date of initial inspection" and "the execution date of initial inspection". (refer to FIG. 3)

The planned date of initial inspection is calculated by the computer program (provide functional software) of the control support server 5 after operating "the registration of the warranty starting date". For example, a date after 3-month period passing of the warranty starting date is calculated as a planned date.

When it is connected to "Web Site of the head office S10" from the portable terminal 3, the machine date of the server and the planned date of initial inspection are collated to each other. Then, the screen of "Advice for initial inspection S51" will be displayed if the machine date from the planned date of initial inspection on and the execution date of initial inspection is not inputted yet.

In turn, when the initial inspection is executed from the planned date of initial inspection on, "Inputting operation of the execution date of initial inspection S82" is executed by the sales shop through the portable terminal 3 (to be described later) and it is written into the date-base of the control support server 5.

Then, when it is connected to the system after inputting operation of the execution date of initial inspection, to check both registrations of "the planned date of initial inspection" and "the execution date of initial inspection", the operation of "Advice for the initial inspection S51" is not carried out, and the operation is transited to the stage of "Information on machine S60".

In addition, when the date does not reach the planned date of initial inspection, similarly, "Advice for the initial inspection S51" is not carried out and then the operation is transited to the stage of "Information on machine S60 ".

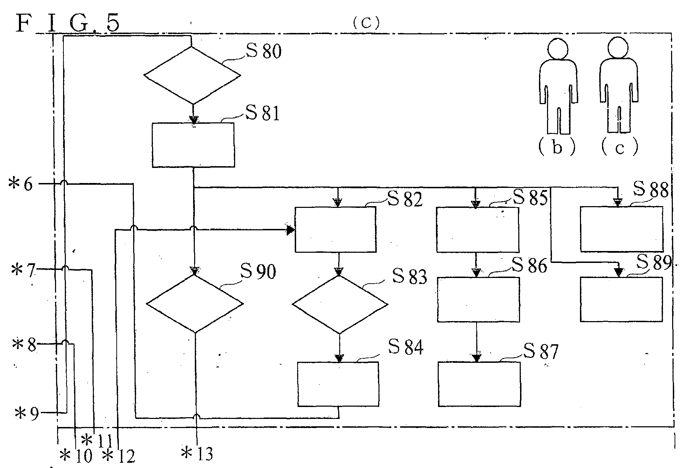

This "Inputting operation of the execution date of initial inspection S82" is carried out exclusively from the portable terminal of the sales shop under authority is provided to the sales shop. (refer to FIG. 5)

In addition, in the case of the initial inspection is not yet executed when the machine date of the server agree with "the planned date of initial inspection" or the machine date before the planned date, a message of "The initial inspection date has come. Please tell the sales shop and let the shop to inspect it." is transmitted to the portable terminal 3 of the business department of head office, and it take attention to the business department head office.

Then, "non-executed inspection" as no registration of the executed date of initial inspection by the sales shop.

The operation is transited to the stage of "Information on machine S60" after operating "the advice for initial inspection".

The working machine is necessary to driving or operation under no trouble or no failure for a safe operation or a longer period usage of it.

In particular, the initial inspection as an inspection at the time from the operation starting date not exceeding so long is important. And a more fast and smooth execution of the initial inspection to prompt by "the advice for the initial inspection".

### <Information on machine>

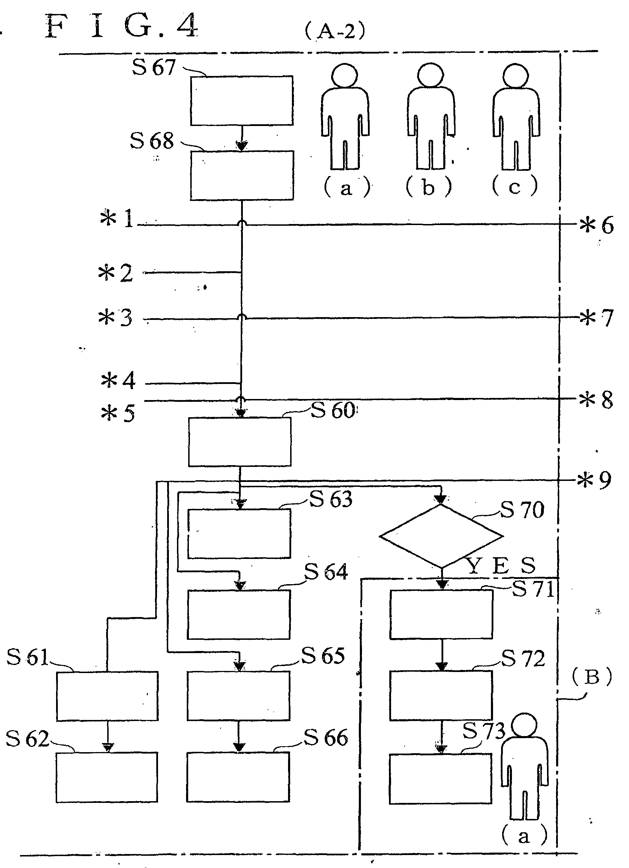

The operation is transited to the stage of "Information on machine S60", as shown FIG. 4, after pass through "Advice for the initial inspection S51".

The screen of "Information machine S60" is provided with buttons "Operation manual", "Maintenance and repairing work recording book", "Inquiry to the head office" and "Cultivation diary".

In this stage, the user executes items that to viewing the operation manual for the working machine, to executing the maintenance and repairing work for working machine, to make inquiries about the vague points to the head office, to make the cultivation diary, etc., after check "the model number, the product number and the machine number" display on the screen of portable terminal.

At first, the operation is transit to the stage of "Operation manual S64" upon tapping the button of "Operation manual" on the page of "Information on machine S60", a corresponding working machine is automatically selected in reference to its product number, and then the user can be viewed a handling manual explaining its name of parts, operating method, etc. At the same time, the user can be also viewed a handling video.

The operation manual can be used to PDF-File or JPG.

The operation manual makes sure a structure or an operating method of the working machine, and explaining a handling operation about the operating method, the operating procedure, etc., and the explanation is provided automatically is regarding to the working machine 1.

"Maintenance and repairing work recording book S61" means a recording book of an engine oil replacement, a paper element cleaning, etc., in order to require the maintenance and repairing work for attaining a longer usage period without any trouble at all. This system does not treat the entire working machine in a lump, and the system adopts means for corresponding to a respective situation of the working machine. It is checks a working time is reference to the product number and the machine number of respective working machine, when it accumulated time that exceeds the specified period, an caution display that to require the maintenance and repairing work is shown on the portable terminal of the consumer.

To explain more concretely, "Maintenance and repairing work recording book S61" provides the button of "Working time" through text box and the button of "Add" on the operation screen. When values input by consumers, the values are stored in the control support server, are processed in such a way that their working times are collected about each of the dates, and display as an accumulated working time and a total working time in the upper column. Then, a button color of under column of "the maintenance and repairing work recording book" is changed to red color from blue color when the accumulated working time exceeds the specified period.

When tapping the red color button of "Maintenance and repairing work recording book", the operation is transited on the screen of "Maintenance and repairing work recording book S61", and it is displayed "Please executed the inspection items." and requires the maintenance and repairing work. To explain more concretely, inspection items such as "Replacement of engine oil", "Replacement of paper element", etc., are displayed. After the maintenance and repairing work is executed, when input the executed date and tapping the button of "Finish", the color of button of "the maintenance and repairing work recording book" is changed to blue color from red color.

In turn, it is possible to execute a voluntary maintenance and repairing work is based on the user's own judgment other than the maintenance and repairing work under the caution display. At this time, another column of "Voluntary maintenance and repairing work record input S62" is provided. When inputting "the year, month and day" in the date column, the values are reflected against accumulate times of "the specified times" of the regular maintenance and repairing work and they are calculated again.

The maintenance and repairing work includes replacement of engine oil or transmission oil. However, since the types of oil and a replacement period corresponding to the types of oil are different, it is preferable to set "the specified period" by the setting reflecting the different replacement period.

On the page of "Information on machine S60" provided to means for enabling inquiry to the head office.

When tapping the button of "Inquiry to the head office" on the page of "Information on machine S60", the screen of "Inquiry transmit S65" is display and the consumer can input an inquiry item in the column of "Content of inquiry", and tapping the button of "Confirm" cause the operation is transited to the stage of "Confirmation to transmit inquiry S66". Then, tapping the button of "Transmit" causes information is transmitted to the head office from the portable terminal 3. A special staff at the head office inputs a reply to the inquiry and tapping the button of "Transmit", the content of reply is transmitted to the portable terminal 3 of the consumer.

This inquiry system can make inquiries directly to the head office and has an advantage that the consumer can ask the special staff as to the question when a question about the operation of the working machine or trouble in works occurs. At the same time, the working machine 1 becoming an object to be inquired is automatically specified, so that non-useless appropriate inquiry, reply and treatment are prompted.

Next, the operation is transited to the stage of "Cultivation diary display or close S71" and "Cultivation diary input or edit S72" after "Setting a password for the consumer S70" in the case of no-password or no agreement password.

The cultivation diary can make a diary describing the working content, etc., through inputting date, title, location, content etc.

At the stage of "Registration of the cultivation diary location S73", it is possible to register a location where the working machine is usually using and can record working content at there. (refer to FIG. 4)

Setting of the above password causes a confidential protection of "cultivation diary".

Making of the cultivation diary, in the case of usage of agricultural machine, can record that the content of the execution of agricultural work and the growing situation of a crop. This recording is related to the working machine 1 specified automatically from two-dimensional code 2.

### <Menu of Sales Shop and optional items>

Some stages described above enable all the three parties to access the system, however only to the sales shop or the business department of head office is authorized to transit from the stage of "Menu of the Sales Shop S81" onward. Because this process relates to exclusive items for the sales shop and the business department of head office.

At, first, the password is setting for the sales shop or the business department of head office. "Authority S80" means allow the operation to be transit to the next stage only when the password is inputted to a Text Box for inputting correspondence password.

At the stage of "Menu of the Sales Shop S81", as shown in FIG. 5, the optional items such as "Inputting for the executed date", etc., are displayed on the screen of the portable terminal, and accordingly "Inputting operation of the execution date of initial inspection S82" can be carried out.

In addition, "Menu of the Sales Shop S81" has "Maintenance record display or close S85", "Maintenance record input or edit S86", "Maintenance record work register S87", "Service manual S88" and "Parts list S89".

Each of "Service manual S88" and "Parts list S89" are provided with "a URL for Service manual" and "a URL for Parts list", and its corresponding access can be attained.

In view of handling of "Inputting operation of the execution date of initial inspection S82", it provides inputting means when the sales shop have a contact from the consumer following the instruction that display of "Please register the execution date of initial inspection at the sales shop where you have received inspection." on dialog box after tapping the button of "The 3-month inspection has been received." at the stage of "Advice for the initial inspection S51".

The person in charge of sales shop, after check "the model number, the product number and the machine number" display on the screen of portable terminal, and input "the execution date of the initial inspection" by a form of "year, month, day" through a spin button and inputs "Name". At the same time, the person in charge of sales shop is tapping the button of "Register" after check the objects of inspection such as an outer appearance, a work system, a driving system , etc.

The data is written into the date-base of the control support server 5 after execution of "Inputting operation of the execution date of initial inspection S82" from the sales shop. In the case of that it is connected to the system after inputting operation of the execution date of initial inspection, to check both registrations of "the planned date of initial inspection" and "the execution date of initial inspection", and "Advice for the initial inspection S51" is not carried out.

That is, when "Inputting operation of the execution date of initial inspection S82" is executed, the operation is transited automatically to the next stage.

Although "Inputting operation of the execution date of initial inspection S82" is applied as an exclusive item for the Sales shop as described above, because this is applied to execute the initial inspection certainly between the consumer and the sales shop.

Then, the consumer select "the maintenance record display or close S85", it is possible to described a record of replacement of oil or claw, the contents of maintenance, etc., and further to input a title, date, contents of execution, etc.

At this time, it is possible to create "Corporation Home Page S63" storing data including the service manual and the parts list, and enables to be connect "the service manual S88" and "the parts list S89" corresponding with the product number of the working machine 1.

"The service manual" has detailed description about inspection, adjustment, disassembly method, etc., of the working machine with photographs and illustrations, and indicating respective scene to facilitate its maintenance work. In addition, although "the parts list" is accompanied with a table of the component parts and so the component elements required for the maintenance work can be got and in this case, the corresponding working machine 1 is automatically specified and guided, resulting in that a labor required for performing a retrieval work can be saved.

### <Menu of the business department of head office and optional items>

Only to the business department of head office is authorized to transit from later stages onward. This setting is for keeping responsibility system for control of the business department of head office.

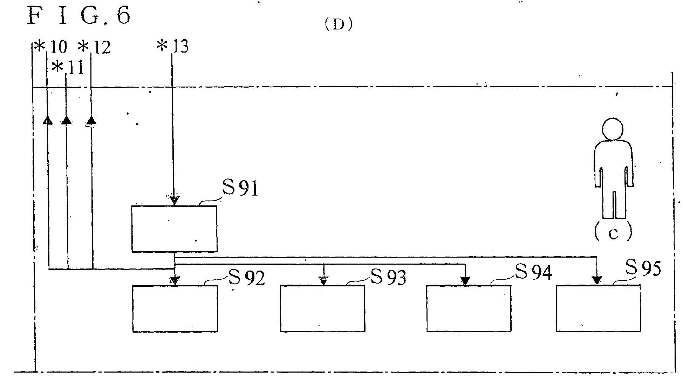

"Authority S90" is executed through inputting of the password set for the business department of head office, as shown in FIG. 6, and "Menu of the head office S91" for the business department of head office is provided.

"Menu of the head office S91" provided means for enabling "Warranty registration after expiring the register permission term S92".

"The registration of warranty starting date S41" should be carried out by the sales shop or the consumer within a specified period from its shipment. If the specified period exceeds, the warranty starting date can not input.

"The warranty registration after expiring the register permission term S92" means for enabling the warranty period to be started when the starting warranty is necessary after expiring of this period.

For example, in the case of the working machine 1 shipped from head office to Sales shop, the specified period from the date of shipment becomes a register permission term of warranty. However, there occurs sometimes that the sales period started from the sales shop is expired this set time, and so it becomes necessary to register the warranty starting date.

When it is connected to "Web Site of the head office S10", the operation is usually transited to the stage of "Registration of the warranty starting date S41" if the warranty starting date is not yet registered. However, if expired the register permission term of warranty when the system is connected to "Web Site of the head office S10", it is displays "The due date has come and please consult our business department" on screen.

A calculation for advising the judgment is based on a comparison date of the register permission term of warranty is calculated by the computer program of the server and the machine date of the proper date.

In the case of the register permission of warranty term was expired, to connect a route described above impossible.

In view of this fact, an exclusive URL S67 is set for the business department of head office not depending upon the connecting-URL of two-dimensional code and the operation logged-in S68 form the exclusive URL S67 directly transits to the stage of "Information on machine S60", and reaches "Menu of the head office S91" through (via) "Menu of the sales shop S81", and the warranty starting date is registered at the stage of "Warranty registration after expiring the register permission term S92".(refer to FIG. 4, FIG. 5 and FIG. 6)

At the stage of "Warranty registration after expiring the register permission term S92", the person in charge of the business department of head office, after check "the model number, the product number and the machine number" display on the screen of portable terminal, to check the register permission term of warranty, to input "the warranty starting date" by a form of "year, month, day" through the spin button, and to tap the button of "the warranty is starting". When the warranty starting date is registered, it is judged that the warranty starting date is already registered and the operation is transited to the stage of "Advice for initial inspection S51" and later.

It is require to inputting the warranty starting date after displays as false prevention notice on the screen of "Warranty registration after expiring the register permission term S92".

It is possible to accommodate flexibly and appropriately in the case of the register permission term is expired.

Since this is a special situation, an exclusive authority is provided to the business department of head office in order to prevent any fail access..

"Menu of the head office S91" has optional items, such as "Manufacturing record inquiry S93", "Shop stock inquiry S94" and "Price and stock inquiry S95" besides above, as shown in FIG. 6.

When tapping the button of "Manufacturing record inquiry", the data such as the processing date, processes, etc., to be search.

Similarly, when tapping the button of "Shop stock inquiry", causes to specify the product number, and the data such as number of stocks in the shop to be search.

When tapping the button of "Price and stock inquiry", the data such as a product name, price, number of stocks, etc., to be searched.

Knowing a price, a presence or non-presence of stock, a record of the processing date, etc., of the working machine 1 can be applied for a reference of the sales control.

In addition, this system is provided means besides above, it is possible to canceling the date such as "the date of informing for safety", the warranty starting date and the execution date of initial inspection. An authority for the execution of canceling operation is provided to the business department of head office.

"Menu of the head office S91" is provided with buttons "Cancel the date of informing for safety", "Cancel the warranty starting date" and "Cancel the execution date of initial inspection".

The explanation of execution of this authority as follows:
The operation is transited through in turn "Confirmation of informing for safety S31", "Authority of the business department of head office level S32", "Cancel the date of informing for safety S33", and tapping the button of "Execute cancel" causes the registration of the date to be canceled after inputting a name of the sales shop and a name of person in charge of.

Similarly the canceling operation of the warranty starting date is carried out.

The operation is transited through a route as like above, "Registration of the warranty starting date S41", "Authority of the business department of head office level S42", "Cancel the warranty starting date S43", and the registration was canceled.

After the warranty starting date is canceled, the warranty starting date is handled to be non-registered, and the operation return to the stage of "Registration of the warranty starting date S41" again under the repeat conformation.(refer to FIG. 3)

As for the canceling operation of the execution date of initial inspection, there is provided an other route for transiting to the stage of "Cancel the execution date of initial inspection S84" under "Authority of the business department of head office S83". (refer to FIG. 5)

For example, in the case of the agricultural machine, there occurs a case in which the working machine 1 once sold is resold to another person during its use.

In this case, "the informing for safety", "the warranty starting date", "the advice for initial inspection", etc., are totally annulled, so it is require to re-registration. Thus, there is provided means for canceling the registration against the previous consumer of the working machine 1.

A reason why the authority concerning the cancel is provided to the business department of head office,
the canceling operation is a special item, and it control to be exclusive to the business department of head office.

Lastly, although the control system of the present invention aims at the working machine 1 that is mainly sold in Japan, the control system can be effectively applied to the working machine sold for overseas market under utilization of the network including the Inter-net.
Using words in FIG. 1
   1 working machine
   2 two-dimensional code
   3 portable terminal (PDA)
   4 network including the Inter-net
   5 control support server
   6 head office production control server
   7 head office sales control server
      (A) consumer
      (B) sales shop
      (C) business department of head office (HO) head office
Using words in FIG. 2 (A) = (A-1)&(A-2)
   (a) consumer
   (b) sales shop
   (c) business department of head office
Using words in FIG. 3 (A-1)
   S10 "Web Site of the head office"
   S20 "Format"
   S30 "Registered the date of informing for safety"
      (Yes->S40, No->S31)
   S31 "Confirmation of informing for safety"
   S32 Authority of the business department of head office level
      (Yes->S33)
   S33 "Cancel the date of inform for safety"
   S40 "Registered the warranty starting date"
      (Yes->S50, No->S41)
   S41 "Registration of warranty starting date"
   S42 Authority of business department of head office level
      (Yes->S43)
   S43 "Cancel the warranty starting date"
   S50 "Non-execute when initial inspection is require"
      (Yes->S51, No->S60)
   S51 "Advice for the initial inspection"
Using words in FIG. 4 (A-2)
   S60 "Information on machine"
   S61 "Maintenance and repairing work recording book"
   S62 "Voluntary maintenance and repairing work record input"
   S63 "Corporation Home Page"
   S64 "Operation manual"
   S65 "Inquiry transmit"
   S66 "Confirmation to transmit inquiry"
   S67 "The exclusive URL" for the business department
   S68 "Logged-in" for the business department
   S70 Setting a password for the consumer
      (Yes->S71)
   S71 "Cultivation diary display or close"
   S72 "Cultivation diary input or edit"
   S73 "Register location of the cultivation diary"
      (B) (a) consumer
Using words in FIG. 5
   S80 "Authority"
   S81 "Menu of the Sales Shop"
   S82 "Inputting operation of the execution date of initial inspection"
   S83 Authority of the business department of head office level
   S84 "Cancel the execution date of initial inspection"
   S85 "Maintenance record display or close"
   S86 "Maintenance record input or edit"
   S87 "Maintenance record word register"
   S88 "Service manual"
   S89 "Parts list"
   S90 Authority of the business department of head office level
      (C) (b) sales shop
      (c) business department of head office
Using words in FIG. 6
   S91 "Menu of the head office"
   S92 "Warranty registration after expiring the register permission term"
   S93 "Manufacturing record inquiry"
   S94 "Shop stock inquiry"
   S95 "Price and stock inquiry"
      (D) (c) business department of head office
using words in FIG. 8
   8 two-dimensional code label
   9 two-dimensional code label protection cover
   10 cylindrical-cylinder body
   11 lid

## Claims

1. A control system for working machine comprising;
a two-dimensional code including an individual identification number and a connecting-URL, is applied to the main body of the working machine;
portable terminals owned by each of the consumers for purchasing the working machine, sales shops for selling the working device to the consumers, and the business department of head office for selling the working machine to the sales shop; and
a control support server connected through the network;
the portable terminals have;
a function for reading the two-dimensional code, a connecting function to the network by wireless and an operation screen;
the control support server provides;
a) to the portable terminals of the consumers, the sales shops or the business department of head office, in accordance with an access to the connecting-URL that is included in the two-dimensional code,
means for enabling to register "a date of informing for safety" on the basis of "a confirmation of informing for safety" and to reject a transition to a next stage when the date is not registered;
means for enabling to register "a warranty starting date" on the basis of a start of warranty and to reject a transition to a next stage when the date is not registered;
means for instructing "an advice for initial inspection" when "the execution date of initial inspection" is not registered yet even after "the initial inspection planned date" calculated on the basis of "the warranty starting date",
means for transiting on a page of "Information on machine" including an operation manual after the registered "the date of informing for safety" and "the warranty starting date" and "the advice for initial inspection" is instructed,
b) to portable terminal of the sales shop, means for enabling to register "the execution date of initial inspection"
c) to the portable terminal of the sales shop, means for enabling to register "the warranty starting date", even if the register permission term of warranty is expired under an access to an exclusive URL.

2. The control system for working machine according to Claim 1, wherein means for providing an caution for an execution of maintenance and repairing work when an accumulated working times of the working machine exceeds a specified time is provided on the page of "Information on machine".

3. The control system for working machine according to Claim 1, wherein means for inputting a cultivation diary is provided on the page of "Information on machine".

4. The control system for working machine according to Claim 1, wherein means for enabling to register of "the date of informing for safety" and "the warranty starting date" to be canceled is provided to the business department of head office.
